# EUROPÄISCHE PATENTANMELDUNG

(11) **EP 4 632 288 A1**
(43) Veröffentlichungstag der Anmeldung: **15.10.2025**
(21) Anmeldenummer: 25169185.3
(22) Anmeldetag: 08.04.2025
(51) Int. Cl.: F24S 25/636, H02S 20/20

(54) **MODULHALTEELEMENT ZUM HALTEN EINES SOLARMODULS AUF EINEM MODULTRÄGER**

(30) Priorität: 08.04.2024 DE 102024109751
(71) Anmelder: Stangl, Franz, 84140 Gangkofen (DE)
(72) Erfinder: Stangl, Franz, 84140 Gangkofen (DE)
(74) Vertreter: Wenzel Nemetzade Warthmüller Patentanwälte Part mbB

(57) **Zusammenfassung**

Es wird ein Modulhalteelement (10,11) zum Halten eines Solarmoduls (90) auf einem Modulträger (95) aufgezeigt, wobei das Modulhalteelement (10,11) folgendes umfasst: ein Befestigungselement (20) mit mindestens einem Vorsprungselement (25, 26) zum Kontaktieren einer Oberseite (92) des Solarmoduls (90), eine Schraube (30), die durch eine Öffnung in dem Befestigungselement (20) geführt ist, zum Halten des Solarmoduls (90) an dem Modulträger (95), ein Gegenelement (40), ein Abstandselement zum Halten des Befestigungselements (20) auf einem vorgegebenen Abstand zu dem Gegenelement (40), wobei der Abstand zwischen dem Befestigungselement (20) und dem Gegenelement (40) durch Anziehen der Schraube (30) verringerbar ist, wobei die Schraube (30) derart ausgebildet ist, dass die Schraube (30) von einer ersten dem Befestigungselement (20) abgewandten Seite des Gegenelements (40) aus anziehbar ist.

## Beschreibung

Die Erfindung betrifft ein Modulhalteelement zum Halten eines Solarmoduls auf einem Modulträger.

### Stand der Technik

Solarmodule werden üblicherweise mittels eines Modulhalteelements an einem Modulträger befestigt, der das Gewicht der Solarmodule trägt. Der Modulträger kann im Freien bzw. im Freiland auf einer Oberfläche angeordnet werden, z.B. auf dem Erdboden oder auf einer Bodenplatte. Das Modulhalteelement weist üblicherweise eine Schraube auf, mit der das Solarmodul mittels des Modulhalteelements nach dem Anordnen des Solarmoduls befestigt wird.

Zum Festschrauben des Solarmoduls muss bisher ein Mensch auf die Oberfläche des Solarmoduls gelangen und von hier aus die Schrauben festziehen. Nachteilig hieran ist, dass durch das Gewicht des Menschen die Solarmodule, das Modulhalteelement und/oder der Modulträger beschädigt werden können.

### Offenbarung der Erfindung

Der Erfindung liegt die Aufgabe zu Grunde, ein Modulhalteelement aufzuzeigen, das technisch einfach ein Solarmodul auf einem Modulträger halten kann, wobei bei dem Befestigen des Solarmoduls an dem Modulträger eine Beschädigung des Solarmoduls sicher vermieden wird.

Diese Aufgabe wird technisch einfach durch ein Modulhalteelement gemäß Anspruch 1 gelöst.

Insbesondere wird die Aufgabe durch ein Modulhalteelement zum Halten eines Solarmoduls auf einem Modulträger gelöst, wobei das Modulhalteelement folgendes umfasst: ein Befestigungselement mit mindestens einem Vorsprungselement zum Kontaktieren einer Oberseite des Solarmoduls, eine Schraube, die durch eine Öffnung in dem Befestigungselement geführt ist, zum Halten des Solarmoduls an dem Modulträger, ein Gegenelement, ein Abstandselement zum Halten des Befestigungselements auf einem vorgegebenen Abstand zu dem Gegenelement, wobei der Abstand zwischen dem Befestigungselement und dem Gegenelement durch Anziehen der Schraube verringerbar ist, wobei die Schraube derart ausgebildet ist, dass die Schraube von einer ersten dem Befestigungselement abgewandten Seite des Gegenelements aus anziehbar ist.

Ein Vorteil hiervon ist, dass die Schraube anziehbar ist, ohne dass auf die Oberseite des Solarmoduls gelangt werden muss, also insbesondere ohne dass ein Mensch sich auf die Oberseite des Solarmoduls begibt. Insbesondere kann die Schraube von unten festgezogen und folglich das Solarmodul auf bzw. an dem Modulträger von unten bzw. unterhalb des Solarmoduls befestigt werden. Somit wird eine Beschädigung des Solarmoduls und/oder des Modulhalteelements und/oder des Modulträgers sicher vermieden. Zudem kann die Befestigung bzw. Installation des Solarmoduls sehr rasch durchgeführt werden, da man sich nicht erst auf die Oberseite des Solarmoduls bewegen muss.

Der Erfindung liegt zudem die Aufgabe zu Grunde, ein Modulträgersystem zum Tragen eines Solarmoduls aufzuzeigen, das technisch einfach das Solarmodul halten kann, wobei bei der Befestigung des Solarmoduls an dem Modulträger eine Beschädigung des Solarmoduls sicher vermieden wird.

Diese Aufgabe wird durch ein Modulträgersystem gemäß Anspruch 11 gelöst.

Insbesondere wird diese Aufgabe durch ein Modulträgersystem zum Tragen eines Solarmoduls gelöst, wobei das Modulträgersystem folgendes umfasst: ein Modulhalteelement wie oben beschrieben, und einen Modulträger zum Aufstellen auf einer Oberfläche, wobei das Modulhalteelement an dem Modulträger befestigt ist.

Der Erfindung liegt zudem die Aufgabe zu Grunde, ein Solarmodulsystem aufzuzeigen, bei dem das Solarmodul technisch einfach gehalten wird, wobei bei dem Befestigen des Solarmoduls an dem Modulträger eine Beschädigung des Solarmoduls zuverlässig vermieden wurde.

Diese Aufgabe wird durch ein Solarmodulsystem gemäß Anspruch 12 gelöst.

Insbesondere wird diese Aufgabe durch ein Solarmodulsystem umfassend ein Modulträgersystem wie oben beschrieben, und ein Solarmodul gelöst, das mittels des Modulhalteelements an dem Modulträger befestigt ist.

Der Erfindung liegt zudem die Aufgabe zu Grunde, ein Verfahren zum Befestigen eines Solarmoduls an einem Modulträger mittels eines Modulhalteelements aufzuzeigen, mittels dem das Solarmodul technisch einfach und zuverlässig ohne Beschädigung des Solarmoduls an dem Modulträger befestigbar ist.

Diese Aufgabe wird durch ein Verfahren gemäß Anspruch 14 gelöst.

Insbesondere wird diese Aufgabe durch ein Verfahren zum Befestigen eines Solarmoduls an einem Modulträger mittels eines Modulhalteelements, insbesondere mittels eines Modulhalteelements wie oben beschrieben, gelöst, wobei das Verfahren folgende Schritte umfasst: Anordnen des Modulträgers auf einer Oberfläche; Bereitstellen des Solarmoduls; Bereitstellen des Modulhalteelements, insbesondere des oben beschriebenen Modulhalteelements; Befestigen des Modulhalteelements an dem Modulträger; Anordnen, insbesondere Einschieben, des Solarmoduls zwischen einem Teil des Modulhalteelements und dem Modulträger; und Anziehen einer Schraube des Modulhalteelements von einer Unterseite des Solarmoduls aus, die der Oberfläche zugewandt ist, zum Befestigen des Solarmoduls an dem Modulträger.

Vorteilhaft an diesem Verfahren ist, dass das Solarmodul technisch einfach, schnell und zuverlässig ohne eine Beschädigung des Solarmoduls installiert bzw. befestigt werden kann. Da kein Mensch sich auf die Oberseite des Solarmoduls bei der Installation begeben muss, wird eine Beschädigung des Solarmoduls durch das Gewicht des Menschen sicher vermieden. Somit ist das Verfahren besonders zuverlässig. Darüber hinaus ist das Verfahren nicht aufwendig.

Gemäß einer Ausführungsform des Modulhalteelements umfasst das Abstandselement eine Feder, die zumindest teilweise zwischen dem Gegenelement und der Öffnung derart angeordnet ist, dass die Feder das Befestigungselement von dem Gegenelement wegdrückt. Vorteilhaft hieran ist, dass das Befestigungselement technisch einfach während der Installation des Solarmoduls von dem Gegenelement entfernt ist bzw. gehalten wird. Auf diese Weise kann das Solarmodul schnell und ohne Beschädigungen zwischen dem Gegenelement und dem Befestigungselement bzw. einem Teil des Befestigungselements eingeführt werden und anschließend mit dem Befestigungselement befestigt werden.

Gemäß einer Ausführungsform des Modulhalteelements umfasst das Abstandselement ein Gewinde in der Öffnung des Befestigungselements. Hierdurch kann ein vorgegebener Abstand zwischen dem Befestigungselement und dem Gegenelement gehalten werden, bevor die Schraube angezogen wird und hierdurch das Befestigungselement sich dem Gegenelement nähert. Insbesondere kann auf eine Feder zum Halten des vorgegebenen Abstands zwischen dem Gegenelement und dem Befestigungselement verzichtet werden.

Gemäß einer Ausführungsform des Modulhalteelements umfasst das Abstandselement eine Mutter mit einem Gewinde für die Schraube, wobei die Mutter auf einer zweiten dem Befestigungselement zugewandten Seite des Gegenelements, insbesondere auf einer Seite des Befestigungselements, die dem Gegenelement abgewandt ist, derart angeordnet ist, dass durch das Anziehen der Schraube der Abstand zwischen dem Befestigungselement und dem Gegenelement verringerbar ist. Ein Vorteil hiervon ist, dass das Abstandselement technisch einfach aufgebaut ist. Zudem lässt sich der Abstand zwischen dem Gegenelement und dem Befestigungselement zuverlässig ändern.

Gemäß einer Ausführungsform des Modulhalteelements weist die Schraube auf der ersten Seite des Gegenelements, die dem Befestigungselement abgewandt ist, einen Schraubenkopf zum Anziehen der Schraube auf. Vorteilhaft hieran ist, dass die Schraube durch Drehen des Schraubenkopfs festgezogen werden kann. Auf diese Weise kann das Befestigungselement nach dem Anordnen oder Einführen des Solarmoduls technisch einfach von unterhalb des Modulhalteelements bzw. des Solarmoduls angezogen werden.

Gemäß einer Ausführungsform des Modulhalteelements weist das Befestigungselement einen in Bezug auf eine durch die Rotationsachse der Schraube asymmetrisch ausgebildeten Haltevorsprung zum Halten der Mutter auf. Ein Vorteil hiervon ist, dass die Mutter technisch einfach von dem Befestigungselement entfernt werden kann. Zudem wird eine unbeabsichtigte Entfernung der Mutter sicher vermieden.

Gemäß einer Ausführungsform des Modulhalteelements weist das Befestigungselement mindestens eine Kontaktfläche zum Kontaktieren eines Rands des Solarmoduls auf, wobei das Befestigungselement eine derartig abgeschrägte Form aufweist, dass die Kontaktfläche die Form eines nicht-rechteckigen Parallelogramms hat. Vorteilhaft hieran ist, dass beim Installieren bzw. Einführen des Solarmoduls in das Modulhaltelement bzw. in den Bereich zwischen dem Befestigungselement/einen Teil des Befestigungselements und dem Gegenelement ein Verkanten des Solarmoduls mit dem Befestigungselement verhindert bzw. zumindest vermindert wird. Wenn das Befestigungselement verdreht ist bzw. die Kontaktfläche bzw. die Kontaktflächen nicht fluchtend zum Rand des Solarmoduls während des Einführens des Solarmoduls ausgerichtet sind, wird durch die abgeschrägte Form des Befestigungselements das Befestigungselement um die Schraubenachse gedreht, so dass ein Verkanten zwischen Befestigungselement und Solarmodul verhindert wird. Zudem muss man beim Einführen des Solarmoduls nicht auf die Oberseite des Solarmoduls, um das Befestigungselement manuell zu drehen. Somit wird das Einführen bzw. Installieren des Solarmoduls erleichtert bzw. beschleunigt.

Gemäß einer Ausführungsform des Modulhalteelements ist das Befestigungselement hinsichtlich einer Symmetrieebene, die die Drehachse der Schraube enthält, spiegelsymmetrisch ausgebildet, abgesehen von einem eventuell vorhandenen Haltevorsprung für die Mutter. Ein Vorteil hiervon ist, dass bei der Installation des Befestigungselements nicht auf die Ausrichtung des Befestigungselements bzw. des Vorsprungselement geachtet werden muss. Dies erleichtert und beschleunigt die Installation.

Gemäß einer Ausführungsform des Modulhalteelements ist zwischen dem Gegenelement und dem Schraubenkopf ein Zwischenraum zum Einführen eines Teils des Modulträgers in den Zwischenraum ausgebildet. Vorteilhaft hieran ist, dass das Modulhalteelement technisch einfach und schnell an dem Modulträger befestigt werden kann.

Gemäß einer Ausführungsform des Modulhalteelements weist das Befestigungselement zwei zueinander abgewandte Vorsprungselemente zum Kontaktieren von zwei Oberseiten von zwei unmittelbar zueinander benachbarten Solarmodulen auf. Auf diese Weise kann ein einziges Modulhalteelement technisch besonders einfach zwei Solarmodule halten.

Gemäß einer Ausführungsform des Solarmodulsystems halten mindestens zwei Modulhalteelemente denselben Rand des Solarmoduls. Auf diese Weise kann das Solarmodul besonders sicher gehalten werden.

Gemäß einer Ausführungsform des Verfahrens wird zum Befestigen des Modulhalteelements an dem Modulträger ein Teil des Modulträgers in einen Zwischenraum, insbesondere einen schlitzförmigen Zwischenraum, des Modulhalteelements eingeführt. Ein Vorteil hiervon ist, dass das Modulhalteelement schnell und technisch einfach an dem Modulträger befestigt wird.

Das Gegenelement kann Teil der Schraube oder des Schraubenkopfs sein oder kann der Schraubenkopf sein. Dies bedeutet, dass die Feder zwischen dem Schraubenkopf und dem Befestigungselement angeordnet sein kann. Alternativ kann das Gegenelement gegenüber dem Schraubenkopf beweglich sein entlang einer Richtung, die entlang oder parallel zu der Drehachse der Schraube verläuft. Das Gegenelement kann ein Flanschelement bzw. ein flanschförmiges Element umfassen oder sein. Denkbar ist auch, dass das Gegenelement eine Scheibe ist, die zwischen einem Ende der Schraube und dem Befestigungselement angeordnet ist. Z.B. kann das Gegenelement eine Art Unterlegscheibe sein, die zwischen dem Schraubenkopf und dem Befestigungselement angeordnet ist. Das Gegenelement bzw. Flanschelement kann um einen Teil des Körpers bzw. des Schafts der Schraube herum angeordnet sein.

Der Begriff "anziehen der Schraube" kann insbesondere bedeuten, dass die Schraube in eine Richtung gedreht wird und sich dadurch das Befestigungselement dem unteren Ende der Schraube nähert bzw. dem Gegenelement nähert bzw. das Befestigungselement zu dem unteren Ende der Schraube hingezogen wird.

Der Begriff "von unten anziehen" kann insbesondere bedeuten, dass die Schraube von einer Position aus angezogen wird, in der die Person, die die Schraube anzieht, sich unterhalb des Solarmoduls, d.h. sich auf einer von der aktiven Fläche des Solarmoduls, das von der Sonne bestrahlt wird, abgewandten Seite befindet, und sich somit zwischen dem Solarmodul und der Oberfläche, auf der das Solarmodul bzw. der Modulträger installiert wird, befindet.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine schematische Seitenansicht einer Ausführungsform des erfindungsgemäßen Modulhalteelements;
- Fig. 2: eine schematische Aufsicht auf das Modulhalteelement aus Fig. 1;
- Fig. 3: eine weitere schematische Seitenansicht des Modulhalteelements aus Fig. 1 bzw. Fig. 2;
- Fig. 4: eine perspektivische Ansicht auf das Modulhalteelement aus den Fig. 1-3;
- Fig. 5: eine weitere perspektivische Ansicht auf das Modulhalteelement aus den Fig. 1-4;
- Fig. 6: eine perspektivische Ansicht der Unterseite des Modulhalteelements aus den Fig. 1-5;
- Fig. 7: eine Explosionsansicht einer Ausführungsform des erfindungsgemäßen Solarmodulsystems;
- Fig. 8: eine weitere Explosionsansicht des Solarmodulsystems aus der Fig. 7;
- Fig. 9: eine weitere Explosionsansicht des Solarmodulsystems aus der Fig. 7 bzw. Fig. 8; und
- Fig. 10: eine perspektivische Ansicht einer Ausführungsform des erfindungsgemäßen Solarmodulsystems.

Bei der nachfolgenden Beschreibung werden für gleiche und gleich wirkende Teile dieselben Bezugsziffern verwendet.

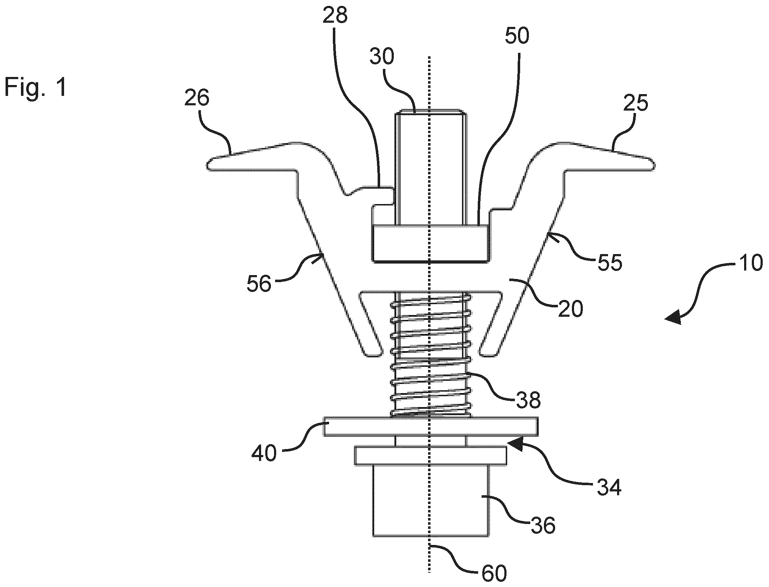

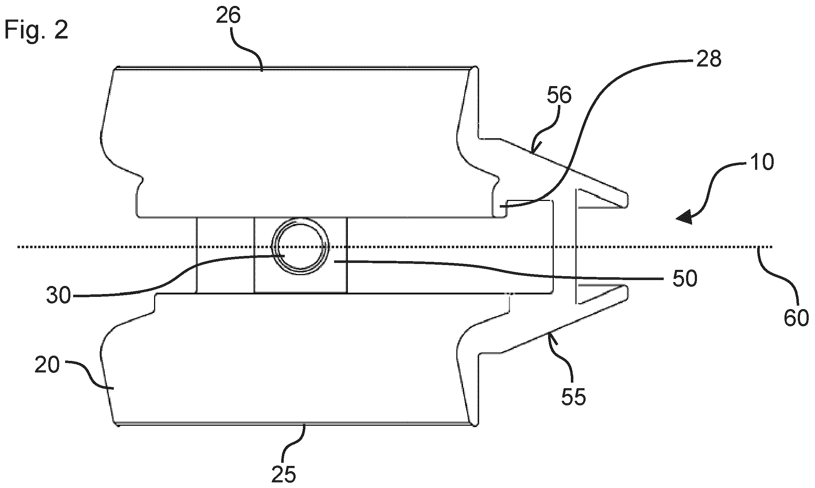

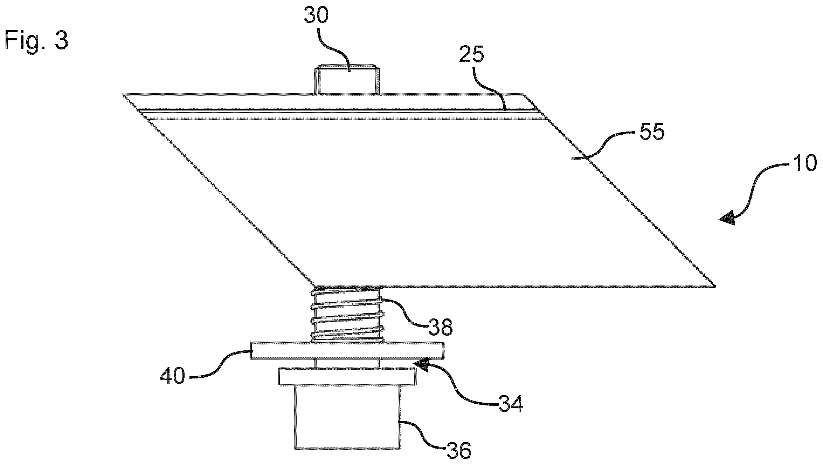

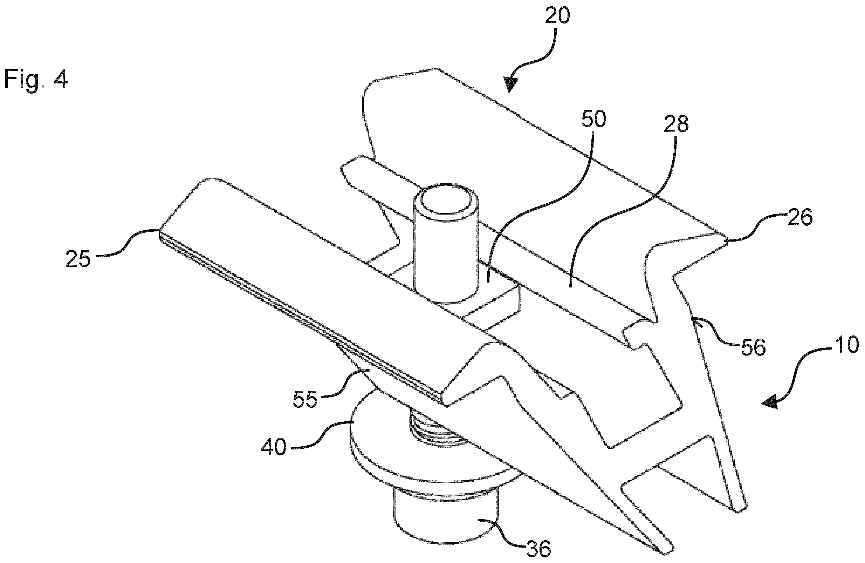

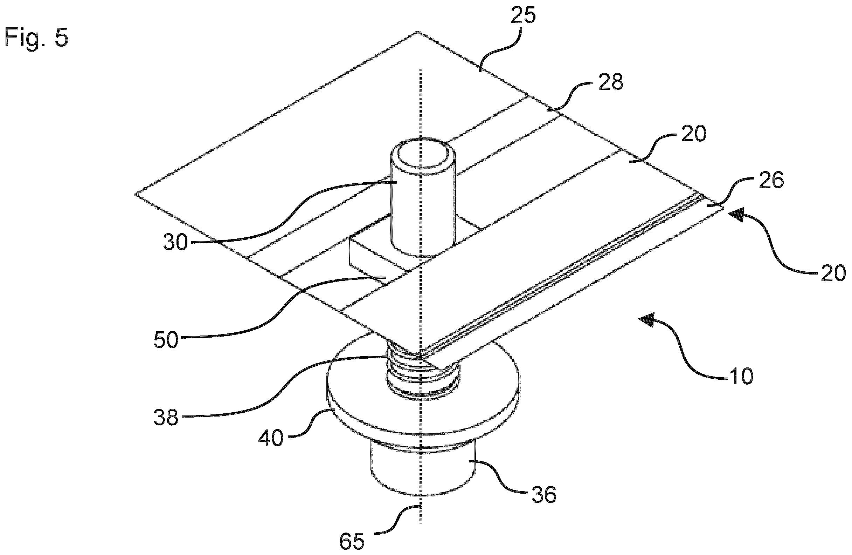

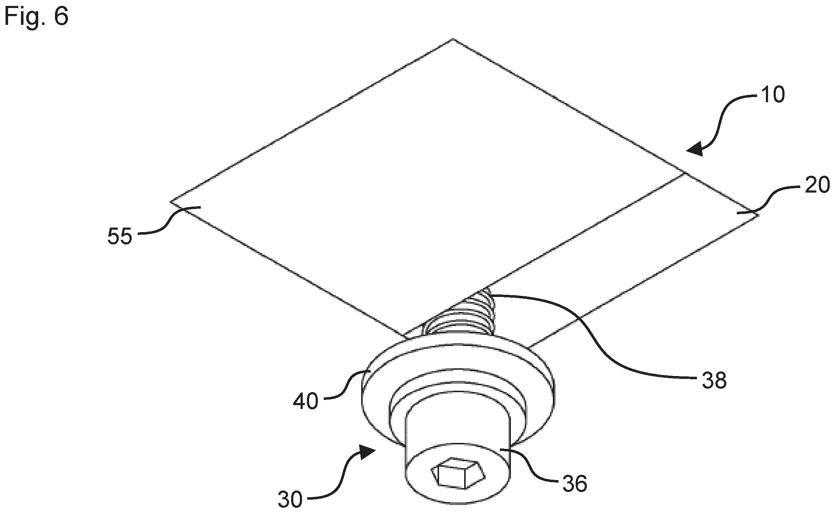

Fig. 1 zeigt eine schematische Seitenansicht einer Ausführungsform des erfindungsgemäßen Modulhalteelements 10, 11. Fig. 2 zeigt eine schematische Aufsicht auf das Modulhalteelement 10, 11 aus Fig. 1. Fig. 3 zeigt eine weitere schematische Seitenansicht des Modulhalteelements 10, 11 aus Fig. 1 bzw. Fig. 2. Fig. 4 zeigt eine perspektivische Ansicht auf das Modulhalteelement 10, 11 aus den Fig. 1-3. Fig. 5 zeigt eine weitere perspektivische Ansicht auf das Modulhalteelement 10, 11 aus den Fig. 1-4. Fig. 6 zeigt eine perspektivische Ansicht der Unterseite des Modulhalteelements 10, 11 aus den Fig. 1-5.

Das Modulhalteelement 10, 11 dient zum Befestigen eines Solarmoduls 90 bzw. eines PV-Moduls auf einem Modulträger 95. Der Modulträger 95 wird z.B. im Freien bzw. im Freiland auf dem Boden angeordnet bzw. befestigt. Nach dem Anordnen des Modulträgers 95 wird das Modulhaltelement an dem Modulträger 95 befestigt. Anschließend wird das Solarmodul 90 angeordnet, insbesondere zwischen dem Befestigungselement 20 und dem Modulträger 95 eingeschoben, und anschließend mittels des Modulhalteelements 10, 11 an dem Modulträger 95 befestigt bzw. gesichert.

Das Modulhalteelement 10, 11 weist ein Befestigungselement 20 auf. Das Befestigungselement 20 ist zum Kontaktieren des Solarmoduls 90 ausgebildet. Das Modulhalteelement 10, 11 hält einen Rand 91 eines Solarmoduls 90 bzw. zwei einander zugewandte Ränder zweier unmittelbar benachbarter Solarmodule 90.

Das Modulhalteelement 10, 11 umfasst eine Schraube 30, die mit dem Modulträger 95 verbunden wird und mittels der das Befestigungselement 20 angezogen werden kann. Die Schraube 30 ist durch eine Öffnung in dem Befestigungselement 20 angeordnet.

Das Befestigungselement 20 weist zwei zueinander abgewandte bzw. in zueinander entgegengesetzte Richtungen weisende Vorsprungselemente 25, 26 auf. In Fig. 1 weisen die Vorsprungselemente 25, 26 nach links und rechts bzw. stehen nach links bzw. rechts von dem restlichen Befestigungselement 20 weg/vor. Die Vorsprungselemente 25, 26 sind zum Übergreifen des jeweiligen Solarmoduls 90 ausgebildet. Ein links von dem Modulhalteelement 10, 11 in Fig. 1-4 bzw. rechts von dem Modulhalteelement 10, 11 in Fig. 1-4 vorhandenes Solarmodul 90 kann jeweils von dem Modulhalteelement 10, 11 gehalten werden. Dies bedeutet, dass das linke Vorsprungselement 25, 26 ein erstes Solarmodul 90 hält bzw. halten kann und dass das rechte Vorsprungselement 25, 26 in zweites Solarmodul hält bzw. halten kann. Unter Halten ist hierbei zu verstehen, dass er Rand 91 des Solarmoduls 90 von oben und/oder von der Seite durch das Befestigungselement 20 kontaktiert wird.

Das Vorsprungselement 25, 26 weist jeweils eine flache Unterseite, die zum Kontaktieren der Oberseite (92) des Solarmoduls 90 ausgebildet ist. Die flache Unterseite verläuft parallel zu dem Gegenelement bzw. Flanschelement 40 und senkrecht zur Drehachse 65 der Schraube 30. Das Befestigungselement 20 weist in Fig. 1 eine von links unten nach rechts oben verlaufende erste Kontaktfläche 55 auf und weist ein von rechts unten nach links oben verlaufende zweite Kontaktfläche 56 auf. Die jeweilige Kontaktfläche 55, 56 ist zum Kontaktieren eines Rands 91 des Solarmoduls 90 ausgebildet.

Das Modulhalteelement 10, 11 bzw. die Schraube 30 weist ein Gegenelement 40 auf. Das Gegenelement 40 ist in Fig. 1 ein Flanschelement. Das Flanschelement 40 verläuft in Fig. 1 horizontal. Das Flanschelement 40 verläuft senkrecht zur Drehachse 65 bzw. Rotationsachse der Schraube 30. Das Flanschelement 40 kann fest mit der Schraube verbunden sein bzw. ein Teil der Schraube sein oder kann ein Element sein, das um den Körper der Schraube herum angeordnet ist, wie z.B. eine Art Unterlegscheibe.

Zwischen dem Flanschelement 40 und dem Befestigungselement 20 ist eine Feder 38 als Abstandselement angeordnet. Das Abstandselement hält das Befestigungselement 20 und somit das Vorsprungselement 25, 26 bzw. die Vorsprungselemente 25, 26 auf einem vorgegebenen Abstand zu dem Flanschelement 40. Die Feder 38 drückt das Flanschelement 40 gegen den Schraubenkopf 36, wenn das Flanschelement 40 nicht fest bzw. starr mit der Schraube 30 verbunden ist bzw. nicht Teil der Schraube 30 ist.

In Fig. 1 ist das Flanschelement 40 ein integraler Teil der Schraube 30 und somit kann sich der Abstand zwischen dem Flanschelement 40 und dem Schraubenkopf 36 nicht verändern. Denkbar ist jedoch auch, dass das Flanschelement kein integraler Teil der Schraube 30 ist und sich somit der Abstand zwischen dem Flanschelement 40 und dem Schraubenkopf 36 verändern kann.

In Fig. 1 ist eine Spiralfeder 38 als Abstandselement zu sehen, die um einen Teil der Schraube 30 herum angeordnet ist. Die Feder 38 erstreckt sich vom Flanschelement 40 der Schraube 30 nach oben bis zur Öffnung in dem Befestigungselement 20 hin. Oberhalb der Öffnung ist eine Mutter 50 gezeigt, die ein zur Schraube 30 komplementäres Gewinde aufweist. Die Schraube 30 ist durch die Mutter 50 geführt. Die Mutter 50 drückt auf eine flache Oberseite des Befestigungselements 20, die zwischen den beiden Kontaktflächen 55, 56 ausgebildet ist.

Die Feder 38 drückt das Befestigungselement 20 gegen die Mutter 50, so dass ein Verdrehen des Befestigungselements 20 in Bezug auf die Schraube 30 verhindert werden, solange die Schraube 30 nicht gedreht wird, da zwischen dem Befestigungselement 20 und der Feder 38 eine Reibkraft vorhanden ist.

Wenn das Gegenelement 40 gegenüber der Schraube 30 beweglich, insbesondere nicht starr ist, dann kann auch ein Verdrehen der Schraube 30 und damit des Befestigungselements 20 gegenüber dem Modulträger 95 verhindert werden, da dann zwischen dem Modulträger 95, der Schraube 30, dem Gegenelement 40 und der Feder 38 Reibung vorhanden ist.

Wenn das Gegenelement 40 fest bzw. nicht beweglich gegenüber der Schraube 30 ist bzw. ein Teil der Schraube 30 ist, kann ein zusätzliches Sicherungselement vorhanden sein, um ein unbeabsichtigtes Verdrehen des Befestigungselements 20 gegenüber dem Modulträger 95 bzw. der Schraube 30 vor der Modulmontage bzw. der Installation des Solarmoduls 90 sicher zu verhindern.

Wenn die Schraube 30 angezogen wird, wird die Mutter 50 in Richtung des Flanschelements 40 angezogen bzw. bewegt. Die Mutter 50 drückt somit das Befestigungselement 20 gegen die Feder 38 bzw. Federkraft nach unten. Durch Anziehen der Schraube 30 wird der Abstand zwischen dem Befestigungselement 20 und dem Flanschelement 40 verringert und die Feder 38 komprimiert.

Die Feder 38 drückt das Befestigungselement 20 von dem Flanschelement 40 weg. Somit kann ein vorgegebener Abstand zwischen dem Flanschelement 40 und den Vorsprungselementen 25, 26 eingestellt bzw. gehalten werden. Das Solarmodul 90 wird zwischen das Vorsprungselement 25, 26 und den Flanschelement 40 bzw. dem Modulträger 95 eingeführt, insbesondere eingeschoben, bis sich das Solarmodul 90 an der gewünschten Stelle bzw. Position befindet. Anschließend wird die Schraube 30 angezogen, wodurch das Befestigungselement 20 gegen das Solarmodul 90 gedrückt wird und dieses das Solarmodul 90 gegen den Modulträger 95 drückt. Hierbei kann das Flanschelement 40 neben dem Solarmodul 90 bzw. zwischen dem Solarmodul 90 und einem unmittelbar hierzu benachbarten Solarmodul 90 angeordnet sein. Vorstellbar ist auch, dass das Solarmodul 90 von dem Befestigungselement 20 zusätzlich oder alternativ gegen das Flanschelement 40 gedrückt wird. Nun ist das Solarmodul 90 befestigt. Zudem wird typischerweise das Solarmodul 90 gegen ein weiteres Modulhalteelement 10, 11 auf einer gegenüberliegenden lateralen Seite des Solarmoduls 90 gedrückt.

Die Windung der Feder 38 ist vorzugsweise andersherum als das Gewinde der Schraube. Hierdurch wird ein Einlegen bzw. Eindringen der Feder 38 in das Gewinde der Schraube 30 bzw. in das Schraubengewinde sicher vermieden. Die Feder 38 kann an ihrem unteren Ende und/oder an ihrem oberen Ende größer sein bzw. einen größeren Durchmesser aufweisen als im Schaftbereich bzw. als im Bereich dazwischen. Beispielsweise ist die unterste Windung und/oder die oberste Windung größer als die restlichen Windungen der Feder. Hierdurch wird vermieden, dass die Feder 38 in die Öffnung des Befestigungselements 20 und/oder in den Bereich zwischen dem Flanschelement 40 und der Schraube 38 gelangt.

Die Feder 38 hält den Abstand zwischen dem Flanschelement 40 und dem Befestigungselement 20, wenn das Flanschelement 40 nicht fest mit der Schraube verbunden ist bzw. nicht integraler Bestandteil der Schraube bzw. des Schraubenkopfs ist. Die Feder 38 stabilisiert das Befestigungselement 20 derart, dass das Befestigungselement 20 entgegen der Schwerkraft oben bleibt, so dass sich das Solarmodul zwischen Befestigungselement 20 und Modulträger technisch einfach einfädeln bzw. einschieben lässt.

Insbesondere wenn das Flanschelement 40 fest mit der Schraube 30 verbunden ist bzw. integraler Bestandteil der Schraube 30 bzw. des Schraubenkopfs 36 ist, kann zwischen dem Schraubenkopf 36 und dem Flanschelement 40 als Sicherungselement eine ebene bzw. abgeflachte Fläche auf der in Fig. 1 oberen Seite des Schraubenkopfes 36 angeordnet bzw. ausgebildet sein, die das Drehen bzw. Verdrehen des Befestigungselementes 20 durch das Anziehen der Schraube 30 bzw. des Schraubenkopfs 36 verhindert. Hierbei ist es auch möglich, dass das Befestigungselement 20 nicht schräg geschnitten ist, sondern lediglich die Kontaktflächen 55, 56 teilweise schräg bzw. als Parallelogramm, das kein Rechteck ist, ausgebildet sind. Denkbar ist auch, dass die Kontaktflächen jeweils rechtwinklig ausgebildet sind.

Das Sicherungselement kann auch derart ausgestaltet sein, dass es direkt die Position zwischen dem Modulträger 95 und einer weiter oben liegenden Position am Befestigungselement 20 vermittelt bzw. herstellt.

Bei einem Sicherungselement, das direkt an der Schraube 30 angesetzt ist bzw. angeordnet ist, ist es denkbar, dass dieses beim Überschreiten einer vorbestimmten Kraft (beispielsweise in einer Richtung entlang der Schraubenachse) und/oder einer Anziehkraft gegenüber dem Schraubenkopf 36 verschiebbar ist oder dass das Sicherungselement beim Überschreiten einer vorbestimmten Kraft (beispielsweise in einer Richtung entlang der Schraubenachse und/oder einer Anziehkraft) teilweise oder vollständig bricht, damit die Schraube 30 angezogen werden kann.

Insbesondere wenn das Gegenelement fest mit der Schraube 30 verbunden ist, kann sich die Schraube gegenüber dem Modulträger 95 drehen.

Der vorgegebene Abstand zwischen dem Gegenelement bzw. dem Flanschelement 40 und dem Vorsprungselement 25, 26 wird derart gewählt, dass ein Einführen des Solarmoduls 90 ohne Verkanten einfach durchführbar ist, und ohne dass die Gefahr besteht, dass das Solarmodul 90 herausfällt.

Das Abstandselement kann anstelle oder zusätzlich zur Feder 38 ein Element zum Halten der Mutter 50 in einer vorgegebenen Position in dem Befestigungselement umfassen. Dies bedeutet, dass das Gewinde der Schraube 30 und das Gewinde der Mutter 50 zusammen als Abstandselement bzw. als Teil des Abstandselement s das Befestigungselement 20 auf einem vorgegebenen Abstand zu dem Flanschelement 40 hält. Denkbar ist auch, dass keine Mutter vorhanden ist und stattdessen die Öffnung des Befestigungselements 20 (durch die die Schraube 30 geführt ist) ein Gewinde aufweist. Dadurch wird das Befestigungselement 20 auf einem vorgegebenen Abstand zu dem Flanschelement 40 gehalten. In diesem Fall wirken das Gewinde der Schraube 30 und das Gewinde des Befestigungselements 20 als Abstandselement.

Der maximale Abstand zwischen dem Schraubenkopf und dem Vorsprungselement wird durch das Gewinde festgelegt. Der maximal erreichbare Abstand zwischen dem Flanschelement und dem Vorsprungselement wird durch die Feder erzeugt.

Üblicherweise befinden sich auf zwei gegenüberliegenden Seiten des Solarmoduls 90 jeweils eine oder zwei Modulhalteelemente 10, 11.

Die Mutter 50 kann die Form eines Quaders, insbesondere eines flachen Quaders, aufweisen. Die Mutter 50 weist eine derartige Breite bzw. einen derartigen Durchmesser auf, dass sich die Mutter 50 in dem Befestigungselement 20 nicht drehen kann.

In Fig. 1 ist der Schraubenkopf 36 unten ausgebildet. Der Schraubenkopf 36 bzw. Kopf der Schraube 30 befindet sich somit auf einer Seite des Flanschelements 40, die dem Befestigungselement 20 bzw. der Feder 38 abgewandt ist. Zwischen dem Flanschelement 40 und dem Kopf der Schraube 30 kann ein Zwischenraum 34 ausgebildet sein. In diesen Zwischenraum 34 kann ein Teil des Modulträgers 95 eingeführt werden und auf diese Weise das Modulhalteelement 10, 11 an dem Modulträger 95 befestigt werden. Der Zwischenraum kann sich aber insbesondere bei nicht starrem Gegenelement (d.h. gegenüber der Schraube 30 beweglichen Gegenelement) auch erst während der Vormontage des Modulhalteelementes auf dem Modulträger 95 ergeben.

Das Anziehen der Schraube 30 kann von unten durchgeführt werden, d.h. von einer Seite, die sich unterhalb des Solarmoduls 90 bzw. unterhalb des Flanschelements 40 der Schraube 30 befindet. Somit ist eine Tätigkeit oberhalb des Solarmoduls 90 bzw. auf der physikalisch aktiven Seite des Solarmoduls 90 (auf der bzw. in der die kristalline Siliziumschicht angeordnet ist) bzw. Oberseite 92 des Solarmoduls 90 nicht notwendig. Insbesondere muss die Oberseite 92 des Solarmoduls 90 bei der Installation des Solarmoduls 90, z.B. durch Einschieben, nicht betreten werden. Das Solarmodul 90 kann nach dem Anordnen bzw. Einschieben des Solarmoduls 90 unterhalb des Befestigungselements 20 bzw. in das Modulhalteelement 10, 11 allein durch Anziehen der Schraube 30 unterhalb des Solarmoduls 90 befestigt werden.

Hierdurch werden Beschädigungen des Solarmoduls 90 durch Aufbringen von Kräften auf die Oberseite 92 des Solarmoduls 90 vermieden bzw. verhindert. Ein Verkratzen der oberen Oberfläche des Solarmoduls 90 wird hierdurch sicher verhindert. Somit kann das Befestigen bzw. Installieren des Solarmoduls 90 technisch besonders sicher durchgeführt werden. Zudem wird das Entstehen von Mikrorissen in der Solarzelle des Solarmoduls 90 sicher verhindert, die durch das Belasten der Solarzelle von oben (z.B. durch Betreten der Solarzelle bzw. des Solarmoduls 90 durch einen Menschen) entstehen können. Solche Mikrorisse können zu einer verminderten Leistung der Solarzelle führen. Dies wird durch die vorliegende Erfindung verhindert.

Darüber hinaus ist das Anziehen der Schraube 30 von unten besonders effizient, da die Unterseite des Modulhalteelements 10, 11 üblicherweise einfach zugänglich ist. Somit kann das Solarmodul 90 besonders schnell und technisch einfach installiert und befestigt werden.

Der Schraubenkopf 36 muss nicht zwingend unterhalb des Flanschelements 40 angeordnet sein. Wichtig ist, dass die Schraube 30 von unterhalb des Flanschelements 40 bzw. nach dem Einschieben des Solarmoduls 90 von unterhalb des Solarmoduls 90 angezogen werden kann. Der Schraubenkopf kann auch in einer Art Nut bzw. Aussparung des Befestigungselements 20 angeordnet sein.

Üblicherweise kann die Schraube 30 auch von unten wieder gelöst werden.

Die Begriffe "unten" und "oben" beziehen sich auf die übliche Anordnung eines Modulträgers 95, eines Modulhalteelements 10, 11 und des Solarmoduls 90. Das Solarmodul 90 befindet sich zumindest teilweise oder vollständig oberhalb des Modulträgers 95. Die Oberseite 92 des Solarmoduls 90 wird von der Sonne bestrahlt. Das Modulhalteelement 10, 11 befindet sich teilweise oberhalb des Modulträgers 95. Die Aufstellungsfläche des Modulträgers 95 bzw. die Oberfläche, auf die der Modulträger 95 angeordnet wird, befindet sich unterhalb des Modulträgers 95 bzw. des Modulhalteelements 10, 11. Der Modulträger 95 ist sozusagen das Montagegestell.

Das Modulhalteelement 10, 11 bzw. das Befestigungselement 20 kann auf seiner dem Vorsprungselement 25, 26 abgewandten Seite einen Haltevorsprung 28 aufweisen. Der Haltevorsprung 28 ist nur an einem Vorsprungselement 25, 26 angeordnet. Denkbar ist, dass an beiden Vorsprungselementen 25, 26 jeweils ein Haltevorsprung angeordnet ist. Der Haltevorsprung 28 steht von einem Vorsprungselement 25, 26 in Richtung des anderen Vorsprungselement 25, 26 in Richtung der Schraube 30 vor. Der Haltevorsprung 28 dient zum Halten der Mutter 50. Gleichzeitig ist die Mutter 50 einfach händisch bzw. manuell unter den Haltevorsprung 28 einführbar. Auf diese Weise wird während der Vormontage des Modulhalteelements 10, 11 auf dem Modulträger 95 die Mutter 50 sicher gehalten, so dass sich die Mutter 50 nicht aus ihrer Position entfernt und der Schraubenkopf 36 sicher in den Modulträger 95 eingefädelt werden kann.

Der Haltevorsprung 28 erstreckt sich derart weit nach Innen bzw. in Richtung der Schraube 30, dass die Schraube 30, ohne dass der Haltevorsprung 28 im Weg ist, in die Öffnung eingeführt bzw. aus der Öffnung ausgeführt werden kann. Dies ist in Fig. 2 klar erkennbar. Dort ist zu sehen, dass das obere Ende der Schraube 30 in dieser Ansicht nicht von dem Haltevorsprung 28 verdeckt wird, sondern der äußere Rand der Schraube 30 fluchtend mit dem Haltevorsprung 28 abschließt.

Vorstellbar ist auch, dass keine Mutter 50 vorhanden ist. In diesem Fall kann die Öffnung des Befestigungselements 20 ein zu der Schraube 30 komplementäres Gewinde aufweisen.

Der Schraubenkopf 36 ist breiter als der Rest der Schraube 30 (das Flanschelement 40 ist hierbei ausgenommen).

Wie in Fig. 2 gezeigt ist das Modulhalteelement 10, 11 in Bezug auf die Drehachse 65 der Schraube 30 rotationsasymmetrisch ausgebildet. Insbesondere sind die beiden Befestigungselemente 20 in Bezug auf eine Symmetrieebene 60, die in Fig. 2 senkrecht zur Zeichenebene und durch die Mitte der Schraube 30 verläuft, symmetrisch ausgebildet (vom Haltevorsprung 28 für die Mutter 50 abgesehen bzw. ausgenommen des Haltevorsprungs 28 für die Mutter 50). Die Symmetrieebene 60 ist in Fig. 2 gezeigt und verläuft senkrecht zur Zeichenebene der Fig. 2. Die Symmetrieebene 60 verläuft parallel zu der Zeichenebene der Fig. 3, aber nicht in der Zeichenebene der Fig. 3. Die Zeichenebene der Fig. 2 verläuft senkrecht zur Drehachse 65 der Schraube 30.

Endklemmen, die an einem Ende des jeweiligen Solarmoduls angeordnet sind und dieses festhalten, können in Bezug auf die Ebene 60, die in Fig. 2 senkrecht zur Zeichenebene und durch die Mitte der Schraube 30 verläuft, nicht-spiegelsymmetrisch ausgebildet sein.

Wie in Fig. 3 deutlich zu erkennen, weisen die Kontaktflächen 55, 56 jeweils die Form eines nicht-rechteckigen Parallelogramms auf. Wie in Fig. 2 zu sehen, ist das Befestigungselement 20 nach rechts abgeschrägt ausgebildet. Dies bedeutet, dass die linke Seite und die rechte Seite des Befestigungselements 20 jeweils nicht senkrecht zur Zeichenebene der Fig. 2 verlaufen, sondern einen Winkel zur Zeichenebene bilden.

Die beiden Kontaktflächen 55, 56 sind jeweils in die gleiche Richtung abgeschrägt. Diese bedeutet, dass sich die hintere Kontaktfläche 55, 56 vollständig hinter der vorderen Kontaktfläche 55, 56 in Fig. 3 befindet. Daher ist die hintere Kontaktfläche 55, 56 bzw. ist der hintere Teil des Befestigungselements 20 in Fig. 3 nicht zu sehen, da er von der vorderen Kontaktfläche 55, 56 bzw. dem vorderen Teil des Befestigungselements 20 verdeckt ist.

Einerseits sind die Kontaktflächen 55, 56 von unten nach oben in Fig. 1 abgeschrägt bzw. schräg ausgebildet. Eine gedachte Verlängerung der jeweiligen Kontaktfläche 55, 56 schneidet eine Längsachse der Schraube 30 bzw. die Drehachse 65 der Schraube 30 in einem Winkel ungleich 90°, insbesondere kleiner gleich 45°.

Andererseits sind die Kontaktflächen 55, 56 wie in Fig. 3 deutlich zu erkennen ist, derart abgeschrägt, dass sie ein nicht-rechteckiges Parallelogramm bilden. Auch die Vorsprungselemente 25, 26 sind entsprechend abgeschrägt.

Durch diese Form der Kontaktflächen 55, 56 wird ein Verkanten des Solarmoduls 90 mit dem Befestigungselement 20 zuverlässig verhindert. Falls die Kontaktfläche 55, 56 jeweils nicht fluchtend mit dem Rand 91 des Solarmoduls 90 ausgerichtet ist (d.h. eine gedachte Verlängerung des Rands 91 des Solarmoduls 90 kreuzt die Kontaktfläche 55, 56), wird durch die Form des Befestigungselements 20 beim Kontakt zwischen dem Rand 91 des Solarmoduls 90 und der Kontaktfläche 55, 56 das Befestigungselement 20 bzw. das gesamte Modulhalteelement 10, 11 um Drehachse 65 der Schraube 30 gedreht. Auf diese Weise richtet sich das Befestigungselement 20 durch Kontaktieren des Solarmoduls 90 bzw. eines Rands 91 des Solarmoduls 90 sozusagen automatisch aus. Dies erleichtert das Einschieben des Solarmoduls 90 zwischen dem Befestigungselement 20 und dem Flanschelement 40 bzw. dem Modulträger 95.

Die Befestigungselemente 20 weisen jeweils einen Abschnitt oberhalb der Kontaktflächen 55, 56 auf, der parallel zu der Drehachse 65 der Schraube 30 verläuft. Dieser Abschnitt verläuft in Fig. 1 von oben nach unten bzw. umgekehrt.

In der Ansicht der Fig. 3 befindet sich die linke untere Ecke der Kontaktfläche 55, 56 des Befestigungselements 20 am linken Rand der Schraube 30. Die Kontaktfläche 55, 56 befindet sich somit in dieser Ansicht größtenteils bzw. mit ihrem größten Flächenanteil rechts von der Schraube 30 bzw. der Feder 38.

Die linke obere Ecke des Befestigungselements 20 befindet sich in Fig. 3 genausoweit weg von der Schaube entfernt wie die rechte obere Ecke des Befestigungselements 20. Die untere linke Ecke des Befestigungselements 20 befindet sich in dieser Ansicht am linken Rand der Schraube 30 bzw. fluchtend mit dem linken Rand der Schraube 30. Die rechte untere Ecke des Befestigungselements 20 befindet sich deutlich bzw. viel weiter von der Schraube 30 entfernt als die linke untere Ecke des Befestigungselements 20. Der in Fig. 2 bzw. Fig. 3 linke Rand des Befestigungselements 20 verläuft somit von oben nach unten auf die Schraube 30 bzw. Drehachse 65 der Schraube 30 zu bzw. nähert sich dieser. Der in Fig. 2 bzw. Fig. 3 rechte Rand des Befestigungselements 20 verläuft somit von oben nach unten von der Schraube 30 bzw. der Drehachse 65 der Schraube 30 weg bzw. entfernt sich von dieser.

Vorstellbar ist auch, dass die Kontaktfläche 55 und/oder die Kontaktfläche 56 jeweils ein Rechteck bilden, d.h. keine schrägen Seitenflächen aufweisen.

Zwischen den beiden Kontaktflächen 55, 56 befindet sich im unteren Bereich des Befestigungselements 20 eine Aussparung, durch deren Mitte die Schraube 30 verläuft.

Das Befestigungselement 20 kann eine Unwucht aufweisen. Dies bedeutet, dass der in Fig. 1 obere Teil bzw. die obere Hälfte des Befestigungselements 20 schwerer, insbesondere ca. 10%, vorzugsweise ca. 20% schwerer, besonders vorzugsweise ca. 30% schwerer, als der untere Teil bzw. die untere Hälfte des Befestigungselements 20 ist.

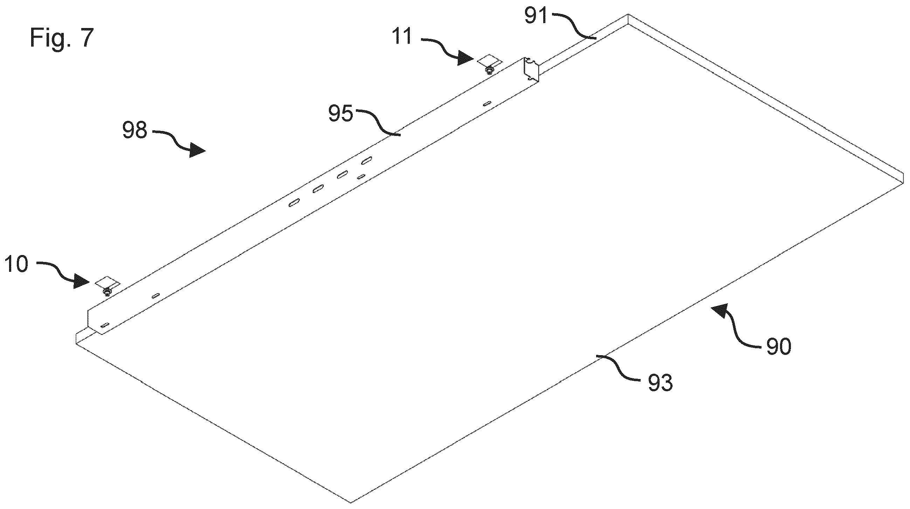

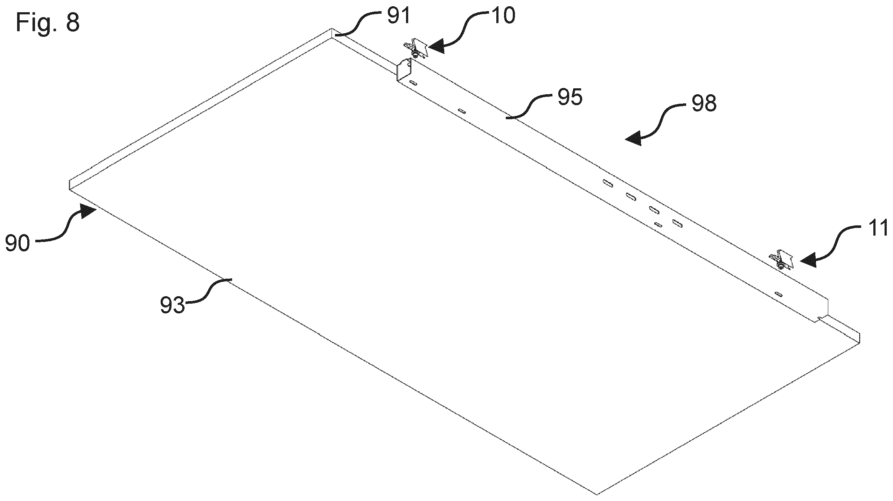

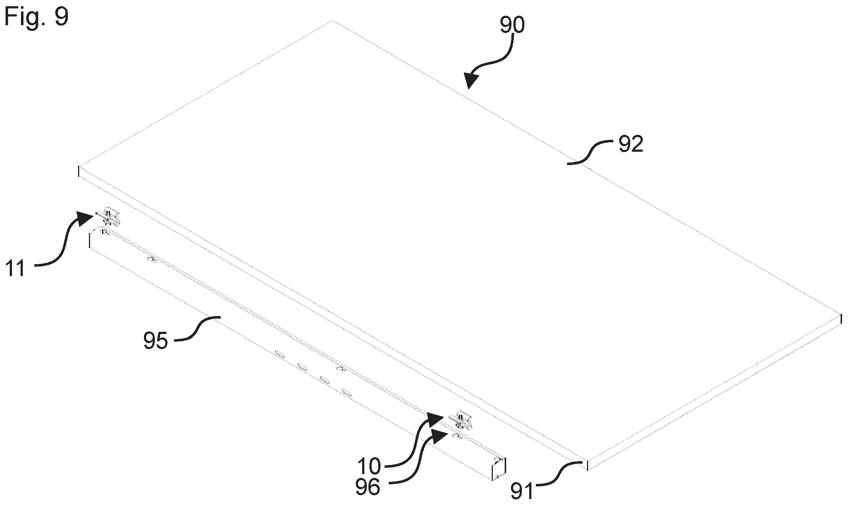

Fig. 7 zeigt eine Explosionsansicht einer Ausführungsform des erfindungsgemäßen Solarmodulsystems 90. Fig. 8 zeigt eine weitere Explosionsansicht des Solarmodulsystems aus der Fig. 7. Fig. 9 zeigt eine weitere Explosionsansicht des Solarmodulsystems aus der Fig. 7 bzw. Fig. 8.

Das Solarmodulsystem ist zum Tragen bzw. Halten eines Solarmoduls 90 ausgebildet. Das Solarmodulsystem umfasst ein Modulhalteelement 10, 11, wie oben beschrieben, und einen Modulträger 95 zum Aufstellen auf einer Oberfläche (der Modulträger 95 ist in Fig. 7 und Fig. 8 nur teilweise gezeigt). Das Modulhalteelement 10, 11 wird an dem Modulträger 95 befestigt. Der Modulträger 95 ist in Fig. 7, Fig. 8 und Fig. 9 nur durch einen Metallrahmen bzw. ein Metallrohr dargestellt.

Der Modulträger 95 weist zumindest eine kreisrunde Aussparung 96 auf, in die ein Teil des Modulhalteelements 10, 11, nämlich das untere Ende der Schraube 30, eingeführt und in denen das Modulhalteelement 10, 11 anschließend seitlich bewegt werden kann, so dass der Modulträger 95 bzw. ein Teil des Modulträgers 95 in den Zwischenraum 34 des Modulhalteelements 10, 11 eingeführt wird. Hierdurch wird das Modulhalteelement 10, 11 an dem Modulträger 95 befestigt.

Der Modulträger 95 kann Streben zum Anordnen des Modulträgers 95 auf dem Boden oder einem Dach eines Gebäudes bzw. auf einer Oberfläche aufweisen. Der Boden bzw. die Oberfläche kann flach sein. Denkbar ist auch, dass die Oberfläche einen Winkel zur Horizontalen aufweist.

In Fig. 7, in Fig. 8 und in Fig. 9 ist das Modulhalteelement 10, 11 nicht an dem Modulträger 95 befestigt. Das Solarmodul 90 ist als flacher Quader in Fig. 7 und in Fig. 8 dargestellt, wobei jeweils die Unterseite 93 des Solarmoduls 90 zu sehen ist. In Fig. 7 und in Fig. 8 sind zwei Modulhalteelemente 10, 11 gezeigt, die beide an demselben Rand 91 des Solarmoduls 90 befestigt werden. Typischerweise werden an dem hierzu gegenüberliegenden Rand des Solarmoduls 90 auch zwei Modulhalteelemente 10, 11 angeordnet.

In Fig. 9 ist die Oberseite 92 des Solarmoduls 90 zu sehen.

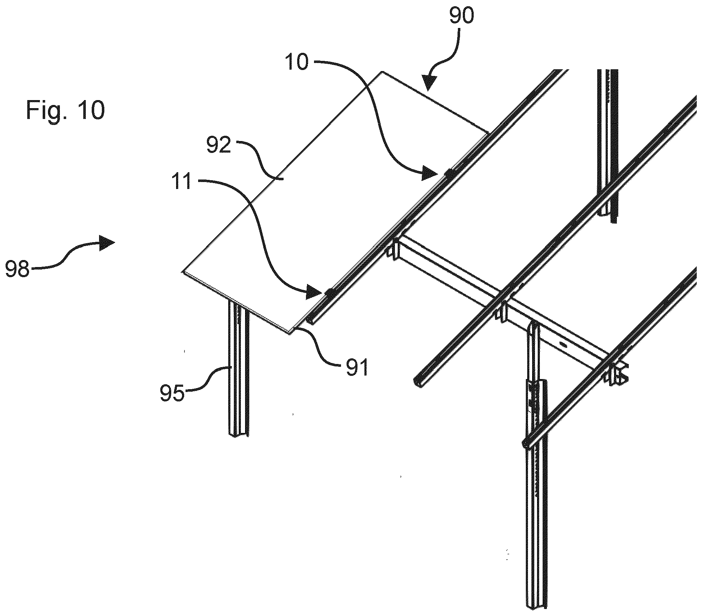

Fig. 10 zeigt eine perspektivische Ansicht einer Ausführungsform des erfindungsgemäßen Solarmodulsystems. Das Solarmodulsystem umfasst einen Modulträger 95, der auf der Oberfläche angeordnet ist. Der Modulträger 95 umfasst Längsstreben, die senkrechte zur Oberfläche (z.B. der Erdboden) verlaufen, Querstreben und Befestigungsstreben. Die Befestigungsstrebe ist auch in den Fig. 7-9 gezeigt. Das Solarmodul 90 ist mit zwei Modulhalteelementen 10, 11, die beide denselben Rand 91 des Solarmoduls 90 halten, befestigt. Das Solarmodul 90 bzw. die Oberfläche des Solarmoduls 90 weist zur Oberfläche einen Winkel auf bzw. ist gekippt. In Fig. 10 ist nur ein Solarmodul 90 installiert. Weitere Solarmodule 90 können entsprechend installiert werden.

Der Modulträger 95 trägt die Gewichtskraft des Solarmoduls 90.

Es sind hierdurch auch folgende Aspekte offenbart:
1) Modulhalteelement (10,11) zum Halten eines Solarmoduls (90) auf einem Modulträger (95), wobei das Modulhalteelement (10,11) folgendes umfasst:
   ein Befestigungselement (20) mit mindestens einem Vorsprungselement (25, 26) zum Kontaktieren einer Oberseite (92) des Solarmoduls (90),
   eine Schraube (30), die durch eine Öffnung in dem Befestigungselement (20) geführt ist, zum Halten des Solarmoduls (90) an dem Modulträger (95),
   ein Gegenelement (40),
   ein Abstandselement zum Halten des Befestigungselements (20) auf einem vorgegebenen Abstand zu dem Gegenelement (40), wobei der Abstand zwischen dem Abstandselement und dem Gegenelement (40) durch Anziehen der Schraube (30) verringerbar ist,
   wobei die Schraube (30) derart ausgebildet ist, dass die Schraube (30) von einer ersten dem Befestigungselement (20) abgewandten Seite des Gegenelements (40) aus anziehbar ist.
2) Modulhalteelement (10,11) nach Aspekt 1, wobei das Abstandselement eine Feder (38) umfasst, die zumindest teilweise zwischen dem Gegenelement (40) und der Öffnung derart angeordnet ist, dass die Feder (38) das Befestigungselement (20) von dem Gegenelement (40) wegdrückt.
3) Modulhalteelement (10,11) nach Aspekt 1 oder 2, wobei das Abstandselement ein Gewinde in der Öffnung des Befestigungselements (20) umfasst.
4) Modulhalteelement (10,11) nach einem der vorhergehenden Aspekte, wobei das Abstandselement eine Mutter (50) mit einem Gewinde für die Schraube (30) umfasst, wobei die Mutter (50) auf einer zweiten dem Befestigungselement (20) zugewandten Seite des Gegenelements (40), insbesondere auf einer Seite des Befestigungselements (20), die dem Gegenelement (40) abgewandt ist, derart angeordnet ist, dass durch das Anziehen der Schraube (30) der Abstand zwischen dem Befestigungselement (20) und dem Gegenelement (40) verringerbar ist.
5) Modulhalteelement (10,11) nach einem der vorhergehenden Aspekte, wobei die Schraube (30) auf der ersten Seite des Gegenelements (40), die dem Befestigungselement (20) abgewandt ist, einen Schraubenkopf (36) zum Anziehen der Schraube (30) aufweist.
6) Modulhalteelement (10,11) nach Aspekt 4 oder Aspekt 5, wobei das Befestigungselement (20) einen in Bezug auf eine durch die Rotationsachse der Schraube (30) asymmetrisch ausgebildeten Haltevorsprung (28) zum Halten der Mutter (50) aufweist.
7) Modulhalteelement (10,11) nach einem der vorhergehenden Aspekte, wobei das Befestigungselement (20) mindestens eine Kontaktfläche (55, 56) zum Kontaktieren eines Rands (91) des Solarmoduls (90) aufweist, wobei das Befestigungselement (20) eine derartig abgeschrägte Form aufweist, dass die Kontaktfläche (55, 56) die Form eines nicht-rechteckigen Parallelogramms hat.
8) Modulhalteelement (10,11) nach einem der vorhergehenden Aspekte, wobei das Befestigungselement (20) hinsichtlich einer Symmetrieebene (60), die die Drehachse (65) der Schraube (30) enthält, spiegelsymmetrisch ausgebildet ist, abgesehen von einem eventuell vorhandenen Haltevorsprung (28) für die Mutter (50).
9) Modulhalteelement (10,11) nach einem der vorhergehenden Aspekte, wobei zwischen dem Gegenelement (40) und dem Schraubenkopf (36) ein Zwischenraum (34) zum Einführen eines Teils des Modulträgers (95) in den Zwischenraum (34) ausgebildet ist.
10) Modulhalteelement (10,11) nach einem der vorhergehenden Aspekte, wobei das Befestigungselement (20) zwei zueinander abgewandte Vorsprungselemente (25, 26) zum Kontaktieren von zwei Oberseiten von zwei unmittelbar zueinander benachbarten Solarmodulen (90) aufweist.
11) Modulträgersystem zum Tragen eines Solarmoduls (90), wobei das Modulträgersystem folgendes umfasst:
   ein Modulhalteelement (10,11) gemäß einem der Aspekte 1-10, und
   einen Modulträger (95) zum Aufstellen auf einer Oberfläche, wobei das Modulhalteelement (10,11) an dem Modulträger (95) befestigt ist.
12) Solarmodulsystem (98) umfassend
   ein Modulträgersystem nach Aspekt 11, und
   ein Solarmodul (90), das mittels des Modulhalteelements (10,11) an dem Modulträger (95) befestigt ist.
13) Solarmodulsystem (98) nach Aspekt 12, wobei
   mindestens zwei Modulhalteelemente (10,11) denselben Rand (91) des Solarmoduls (90) halten.
14) Verfahren zum Befestigen eines Solarmoduls (90) an einem Modulträger (95) mittels eines Modulhalteelements (10,11), insbesondere mittels eines Modulhalteelements (10,11) nach einem der Aspekte 1-10, wobei das Verfahren folgende Schritte umfasst:
   Anordnen des Modulträgers (95) auf einer Oberfläche;
   Bereitstellen des Solarmoduls (90);
   Bereitstellen des Modulhalteelements (10,11), insbesondere des
   Modulhalteelements (10,11) gemäß einem der Aspekte 1-10;
   Befestigen des Modulhalteelements (10,11) an dem Modulträger (95);
   Anordnen, insbesondere Einschieben, des Solarmoduls (90) zwischen einem Teil des Modulhalteelements (10,11) und dem Modulträger (95); und
   Anziehen einer Schraube (30) des Modulhalteelements (10,11) von einer Unterseite (93) des Solarmoduls (90) aus, die der Oberfläche zugewandt ist, zum Befestigen des Solarmoduls (90) an dem Modulträger (95).
15) Verfahren nach Aspekt 14, wobei
   zum Befestigen des Modulhalteelements (10,11) an dem Modulträger (95) ein Teil des Modulträgers (95) in einen Zwischenraum (34), insbesondere einen schlitzförmigen Zwischenraum (34), des Modulhalteelements (10,11) eingeführt wird.

### Bezugszeichenliste

- 10, 11: Modulhalteelement
- 20: Befestigungselement
- 25, 26: Vorsprungselement
- 28: Haltevorsprung
- 30: Schraube
- 34: Zwischenraum
- 36: Schraubenkopf
- 38: Feder
- 40: Gegenelement/Flanschelement
- 50: Mutter
- 55, 56: Kontaktfläche
- 60: Symmetrieebene
- 65: Drehachse der Schraube
- 90: Solarmodul
- 91: Rand des Solarmoduls
- 92: Oberseite des Solarmoduls
- 93: Unterseite des Solarmoduls
- 95: Modulträger
- 96: kreisrunde Aussparung des Modulträgers
- 98: Solarmodulsystem

## Patentansprüche

1. Modulhalteelement (10,11) zum Halten eines Solarmoduls (90) auf einem Modulträger (95), wobei das Modulhalteelement (10,11) folgendes umfasst:
ein Befestigungselement (20) mit mindestens einem Vorsprungselement (25, 26) zum Kontaktieren einer Oberseite (92) des Solarmoduls (90),
eine Schraube (30), die durch eine Öffnung in dem Befestigungselement (20) geführt ist, zum Halten des Solarmoduls (90) an dem Modulträger (95),
ein Gegenelement (40),
ein Abstandselement zum Halten des Befestigungselements (20) auf einem vorgegebenen Abstand zu dem Gegenelement (40), wobei der Abstand zwischen dem Befestigungselement (20) und dem Gegenelement (40) durch Anziehen der Schraube (30) verringerbar ist,
wobei die Schraube (30) derart ausgebildet ist, dass die Schraube (30) von einer ersten dem Befestigungselement (20) abgewandten Seite des Gegenelements (40) aus anziehbar ist.

2. Modulhalteelement (10,11) nach Anspruch 1, wobei
das Abstandselement eine Feder (38) umfasst, die zumindest teilweise zwischen dem Gegenelement (40) und der Öffnung derart angeordnet ist, dass die Feder (38) das Befestigungselement (20) von dem Gegenelement (40) wegdrückt.

3. Modulhalteelement (10,11) nach Anspruch 1 oder 2, wobei
das Abstandselement ein Gewinde in der Öffnung des Befestigungselements (20) umfasst.

4. Modulhalteelement (10,11) nach einem der vorhergehenden Ansprüche, wobei das Abstandselement eine Mutter (50) mit einem Gewinde für die Schraube (30) umfasst, wobei die Mutter (50) auf einer zweiten dem Befestigungselement (20) zugewandten Seite des Gegenelements (40), insbesondere auf einer Seite des Befestigungselements (20), die dem Gegenelement (40) abgewandt ist, derart angeordnet ist, dass durch das Anziehen der Schraube (30) der Abstand zwischen dem Befestigungselement (20) und dem Gegenelement (40) verringerbar ist.

5. Modulhalteelement (10,11) nach einem der vorhergehenden Ansprüche, wobei die Schraube (30) auf der ersten Seite des Gegenelements (40), die dem Befestigungselement (20) abgewandt ist, einen Schraubenkopf (36) zum Anziehen der Schraube (30) aufweist.

6. Modulhalteelement (10,11) nach Anspruch 4 oder Anspruch 5, wobei das Befestigungselement (20) einen in Bezug auf eine durch die Rotationsachse der Schraube (30) asymmetrisch ausgebildeten Haltevorsprung (28) zum Halten der Mutter (50) aufweist.

7. Modulhalteelement (10,11) nach einem der vorhergehenden Ansprüche, wobei das Befestigungselement (20) mindestens eine Kontaktfläche (55, 56) zum Kontaktieren eines Rands (91) des Solarmoduls (90) aufweist,
wobei das Befestigungselement (20) eine derartig abgeschrägte Form aufweist, dass die Kontaktfläche (55, 56) die Form eines nicht-rechteckigen Parallelogramms hat.

8. Modulhalteelement (10,11) nach einem der vorhergehenden Ansprüche, wobei das Befestigungselement (20) hinsichtlich einer Symmetrieebene (60), die die Drehachse (65) der Schraube (30) enthält, spiegelsymmetrisch ausgebildet ist, abgesehen von einem eventuell vorhandenen Haltevorsprung (28) für die Mutter (50).

9. Modulhalteelement (10,11) nach einem der vorhergehenden Ansprüche, wobei zwischen dem Gegenelement (40) und dem Schraubenkopf (36) ein Zwischenraum (34) zum Einführen eines Teils des Modulträgers (95) in den Zwischenraum (34) ausgebildet ist.

10. Modulhalteelement (10,11) nach einem der vorhergehenden Ansprüche, wobei das Befestigungselement (20) zwei zueinander abgewandte Vorsprungselemente (25, 26) zum Kontaktieren von zwei Oberseiten von zwei unmittelbar zueinander benachbarten Solarmodulen (90) aufweist.

11. Modulträgersystem zum Tragen eines Solarmoduls (90), wobei das Modulträgersystem folgendes umfasst:
ein Modulhalteelement (10,11) gemäß einem der Ansprüche 1-10, und
einen Modulträger (95) zum Aufstellen auf einer Oberfläche, wobei das Modulhalteelement (10,11) an dem Modulträger (95) befestigt ist.

12. Solarmodulsystem (98) umfassend
ein Modulträgersystem nach Anspruch 11, und
ein Solarmodul (90), das mittels des Modulhalteelements (10,11) an dem Modulträger (95) befestigt ist.

13. Solarmodulsystem (98) nach Anspruch 12, wobei
mindestens zwei Modulhalteelemente (10,11) denselben Rand (91) des Solarmoduls (90) halten.

14. Verfahren zum Befestigen eines Solarmoduls (90) an einem Modulträger (95) mittels eines Modulhalteelements (10,11), insbesondere mittels eines Modulhalteelements (10,11) nach einem der Ansprüche 1-10, wobei das Verfahren folgende Schritte umfasst:
Anordnen des Modulträgers (95) auf einer Oberfläche;
Bereitstellen des Solarmoduls (90);
Bereitstellen des Modulhalteelements (10,11), insbesondere des
Modulhalteelements (10,11) gemäß einem der Ansprüche 1-10;
Befestigen des Modulhalteelements (10,11) an dem Modulträger (95);
Anordnen, insbesondere Einschieben, des Solarmoduls (90) zwischen einem Teil des Modulhalteelements (10,11) und dem Modulträger (95); und
Anziehen einer Schraube (30) des Modulhalteelements (10,11) von einer Unterseite (93) des Solarmoduls (90) aus, die der Oberfläche zugewandt ist, zum Befestigen des Solarmoduls (90) an dem Modulträger (95).

15. Verfahren nach Anspruch 14, wobei
zum Befestigen des Modulhalteelements (10,11) an dem Modulträger (95) ein Teil des Modulträgers (95) in einen Zwischenraum (34), insbesondere einen schlitzförmigen Zwischenraum (34), des Modulhalteelements (10,11) eingeführt wird.
